# EUROPEAN PATENT SPECIFICATION

(11) **EP 4 566 751 B1**
(45) Date of publication and mention of the grant of the patent: **02.09.2026**
(21) Application number: 24215983.8
(22) Date of filing: 28.11.2024
(51) Int. Cl.: B23Q 5/04, B23Q 11/00

(54) **DEVICE FOR PROCESSING DENTAL PROSTHESIS WITH REDUCED NOISE**
VORRICHTUNG ZUR GERÄUSCHREDUZIERTEN BEARBEITUNG VON ZAHNERSATZTEILEN
DISPOSITIF DE TRAITEMENT DE PROTHÈSE DENTAIRE À BRUIT RÉDUIT

(30) Priority: 08.12.2023 KR 20230177529
(43) Date of publication of application: 11.06.2025
(73) Proprietor: Huvitz Co., Ltd., Anyang-si, Gyeonggi-do 14055 (KR)
(72) Inventor: KYON, Byung Woo, 14055 Anyang-si (KR); LEE, Weon Joon, 14055 Anyang-si (KR)
(74) Representative: Henkel & Partner mbB

(56) References cited:
- CN-A- 113 199 063
- KR-B1- 101 483 413
- KR-B1- 101 854 730
- US-A1- 2011 002 775

## Description

### FIELD OF THE DISCLOSURE

The present disclosure relates to a device for processing a dental prosthesis and, more particularly, to a device for processing a dental prosthesis with reduced noise.

### BACKGROUND

A dental prosthesis processing device is a device that processes a high-hardness material such as ceramic into a desired shape to produce a dental prosthesis.

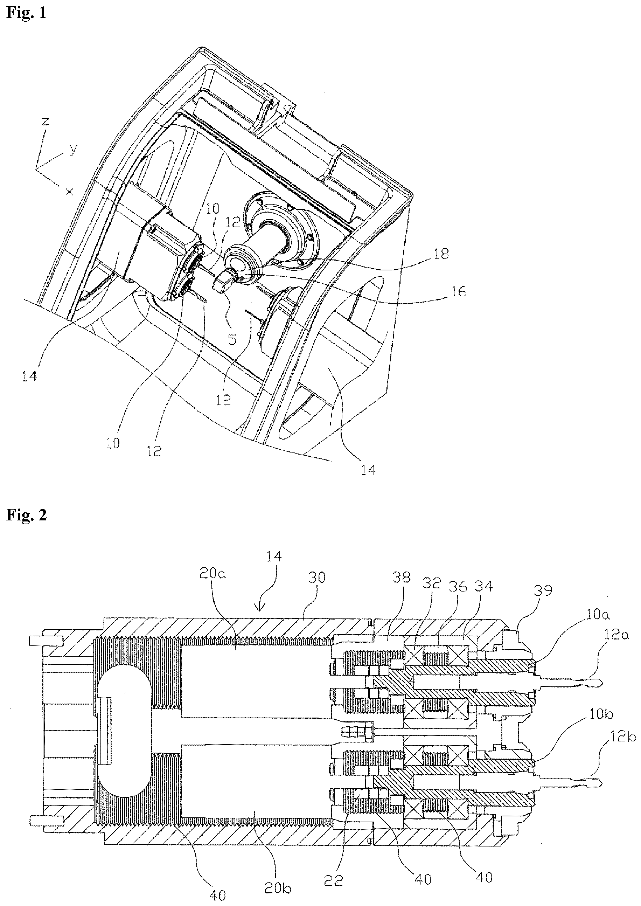

FIG. 1 is a view showing the structure of a typical dental prosthesis processing device. As shown in FIG. 1, the typical dental prosthesis processing device includes a spindle 10 that is rotated by a motor (not shown), a machining tool 12, such as a drill or burr, that is mounted on an axis end of the spindle 10 and is rotated together with the spindle 10, a spindle mounting part 14 on which the spindle 10 is mounted and driven in the up-down and left-right directions (z-direction and x-direction), and a workpiece mounting part 18 on which a workpiece 5 is mounted and driven in the front-back direction (y-direction). The workpiece 5 is mounted on the workpiece mounting part 18 through a workpiece holder 16 that functions as a jig.

According to the shape data of the prosthesis to be processed, the spindle mounting part 14 moves in the up-down and left-right directions (z-direction and x-direction), and the workpiece mounting part 18 moves in the front-back direction (y-direction). At this time, the spindle 10 and the machining tool 12 are rotated by a motor at a high speed of approximately 20,000 to 100,000 rpm, for example, 30,000 to 50,000 rpm, and come into contact with the workpiece 5 to process the workpiece 5 into the shape of a prosthesis.

The spindle 10 rotating at high speed inside the spindle mounting part 14 generates a unique high-frequency noise, and the generated noise is transmitted outside the spindle mounting part 14. Since the dental prosthesis processing device processes a high-hardness material by using the machining tool 12 rotating at high-speed, there is a problem that the working environment deteriorates such as causing discomfort to the user due to the grinding noise generated when grinding a high-hardness material and the high-frequency noise generated by the rotation of the spindle 10.

In particular, as illustrated in FIG. 1, in the case of a dental prosthesis processing device having a dual spindle structure in which two spindles 10 are mounted on one spindle mounting part 14, high-frequency noise generated by the rotation of the spindles 10 may become more problematic.

### [Prior Art Documents]

(Patent document 1) Korean Patent Registration No. 10-1483413
(Patent document 2) Korean Patent Registration No. 10-1854730, forming the basis for the preamble of claim 1.

### SUMMARY OF THE DISCLOSURE

### TECHNICAL OBJECTS

An object of the present disclosure is to provide a device for processing a dental prosthesis with reduced noise.

Another object of the present invention is to provide a dental prosthesis processing device capable of reducing high-frequency noise generated by a spindle rotating at high speed.

### TECHNICAL SOLUTION

To achieve the above object, the present disclosure provides a device for processing a dental prosthesis, as defined in claim 1.

### EFFECTS OF THE DISCLOSURE

The dental prosthesis processing device according to the present disclosure may reduce high-frequency noise generated when the spindle rotates at high speed.

### BRIEF DESCRIPTION OF THE DRAWINGS

FIG. 1 is a view showing the structure of a typical dental prosthesis processing device.
FIG. 2 is a longitudinal cross-sectional view of a spindle mounting part 14 used in a dental prosthesis processing device according to an embodiment of the present disclosure.
FIG. 3 is a diagram showing a state in which noise waves are reflected and amplified on the inner surface of a spindle mounting housing 30 having a conventional flat inner surface.
FIG. 4 is a diagram showing a state in which noise waves are diffusely reflected and canceled out on the inner surface of a spindle mounting housing 30 having an inner surface on which a roughened portion 40 is formed according to an embodiment of the present disclosure.

### DETAILED DESCRIPTION OF THE PREFERRED EMBODIMENTS

Hereinafter, the present disclosure will be described in more detail with reference to the accompanying drawings. In the attached drawings, components that perform the same or similar functions as those of the related art are given the same reference symbols. Additionally, in the description of the present disclosure, terms such as up and down, left and right, front and back, horizontal, and vertical may be used to indicate the relative positional relationship between components.

FIG. 2 is a longitudinal cross-sectional view of a spindle mounting part 14 used in the dental prosthesis processing device according to an embodiment of the present disclosure. The dental prosthesis processing device according to the present disclosure has the same structure as the typical dental prosthesis processing device illustrated in FIG. 1, except for the internal configuration of the spindle mounting part 14 on which the spindle 10 is mounted.

As shown in FIGS. 1 and 2, the dental prosthesis processing device according to the present disclosure includes one or more spindles 10a and 10b that are rotationally driven by one or more motors 20a and 20b, machining tools 12a and 12b, such as a drill or a burr, that are mounted on axis ends of the spindles 10a and 10b to rotate together with the spindles 10a and 10b, a spindle mounting part 14 that is driven in the up-down and left-right directions (z-direction and x-direction) and on which the motors 20a and 20b and the spindles 10a and 10b are mounted, and a workpiece mounting part 18 on which a workpiece 5 is fixedly mounted and driven in the front-back direction (y-direction). The machining tools 12a and 12b may include a crude machining tool 12a used for initial machining of the workpiece 5, and a fine machining tool 12b used for fine machining of the workpiece 5. If necessary, the workpiece mounting part 18 may be driven to rotate around its axis (y-axis). In this specification, the spindle 10a or 10b refers to a spindle axis that is rotationally driven by the motor 20a or 20b.

The control unit (not shown) of the dental prosthesis processing device according to the present disclosure controls the driving of the motors 20a and 20b while moving the spindle mounting part 14 in the up-down and left-right directions (z-direction and x-direction) and moving the workpiece mounting part 18 in the front-back direction (y-direction) so as to rotate the spindles 10a and 10b and the machining tools 12a and 12b at high speed, thereby grinding the workpiece 5 in contact with the machining tools 12a and 12b to process it into a prosthesis of a desired shape.

As illustrated in FIG. 2, the spindle mounting part 14 used in the dental prosthesis processing device according to the present disclosure includes a spindle mounting housing 30 in which the motors 20a and 20b and the spindles 10a and 10b are mounted in its internal space, and one or more bearings 32 mounted inside the spindle mounting housing 30 and rotatably supporting the spindles 10a and 10b.

In the present disclosure, inside the spindle mounting housing 30, a roughened portion 40 that diffusively reflects noise generated by the rotation of the motors 20a and 20b and the spindles 10a and 10b is formed in, specifically, at least a portion, for example, at least 20% or more, preferably 50% or more, and more preferably all, of the area exposed to the inside of the spindle mounting housing 30.

When a roughened portion 40 is formed inside the spindle mounting housing 30, noise generated from the motor 20a or 20b and the spindle 10a or 10b collides with the roughened portion 40 formed by processing the inner surface of the spindle mounting housing 30, and the noise colliding with the roughened portion 40 is reduced by being diffusely reflected and canceled out.

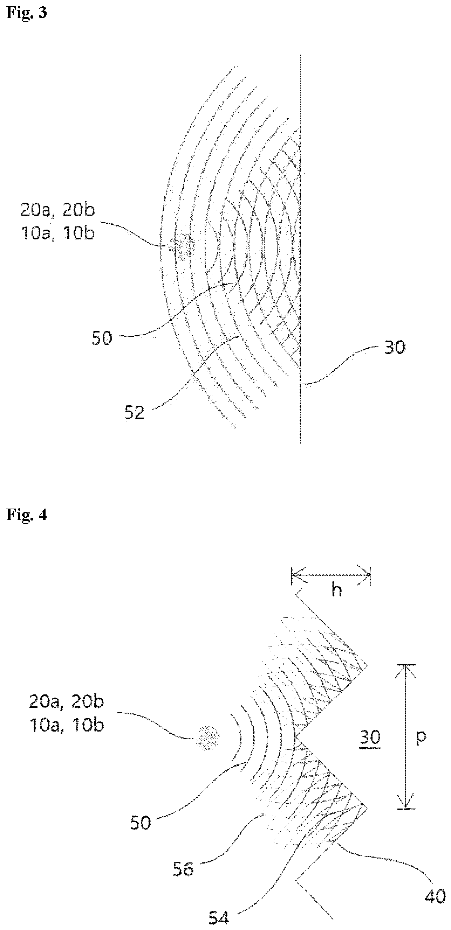

FIG. 3 is a diagram showing a state in which noise waves are reflected and amplified on the inner surface of the spindle mounting housing 30 having a conventional flat inner surface. FIG. 4 is a diagram showing a state in which noise waves are diffusely reflected and canceled out on the inner surface of the spindle mounting housing 30 having an inner surface on which a roughened portion 40 is formed according to an embodiment of the present disclosure.

As shown in FIG. 3, the noise wave 50 generated by the high-speed rotation of the motors 20a and 20b and the spindles 10a and 10b is reflected from the flat inner surface of the spindle mounting housing 30 and returns as a reflected wave 52. At this time, the frequency, wavelength, and velocity of the reflected wave 52 do not change, and the direction of reflection is constant. Hence, noise generated inside the spindle mounting housing 30 may leak out through unsealed gaps or vibrations of the spindle mounting housing 30, and the noise may be amplified if there is a shape that concentrates waves.

On the other hand, as shown in FIG. 4, in the dental prosthesis processing device according to the present disclosure, the noise wave 50 generated by the high-speed rotation of the motors 20a and 20b and the spindles 10a and 10b is diffusely reflected by the roughened portion 40 formed on the inner surface of the spindle mounting housing 30 to thereby generate diffusely reflected waves 54 whose reflection directions are not fixed. The diffusely reflected waves 54 interfere with each other to form canceling waves 56, thereby reducing the noise generated in the spindle mounting housing 30.

The roughened portion 40 may have various shapes that may diffusely reflect noise generated by the high-speed rotation of the motors 20a and 20b and the spindles 10a and 10b. For example, the roughened portion 40 may be a protrusion, a groove, a screw thread, a knurl, or the like formed on the inner surface of the spindle mounting housing 30. For example, as shown in FIGS. 2 and 4, the inner surface of the spindle mounting housing 30 may have a cylindrical structure, and a roughened portion 40 having a screw thread shape may be formed on the inner surface of the cylindrical structure. The height (h) of the roughened portion 40 formed on the inner surface of the spindle mounting housing 30 may be appropriately set so as to reduce noise by diffusely reflecting noise generated from the motors 20a and 20b and the spindles 10a and 10b, and is, for example, 0.01 to 2 mm, preferably 0.1 to 1 mm, and more preferably 0.2 to 0.8 mm. The screw thread and knurl portion is formed by threading or knurling the inner surface of the spindle mounting portion housing 30, and the cross-sectional shape thereof may have various shapes such as a triangle ( 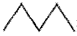 ), a square ( 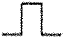 ), a circle ( 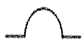 ), or the like, and a triangle shape is preferable. The height (h) of the screw thread and knurl portion is, for example, 0.01 to 2 mm, preferably 0.1 to 1 mm, more preferably 0.2 to 0.8 mm, and the pitch (p) thereof is, for example, 0.01 to 4 mm, preferably 0.1 to 2 mm, more preferably 0.2 to 1 mm.

Referring back to FIG. 2, it is preferable that the roughened portion 40 be formed on the inner surface of the spindle mounting housing 30 adjacent to the motors 20a and 20b and spindles 10a and 10b, which are the source of noise.

As shown in FIG. 2, one end of the spindle mounting housing 30 may further be equipped with a motor bracket 38 for fixing the motors 20a and 20b, a bearing housing 34 for accommodating the bearings 32, a bearing spacer 36 fitted between the bearings 32 to maintain a gap between the bearings 32, and the like. Since the motor bracket 38, bearing housing 34 and bearing spacer 36 surround the motors 20a and 20b and the spindles 10a and 10b, a roughened portion 40 may be formed on at least one of the motor bracket 38, bearing housing 34, and bearing spacer 36.

As shown in FIG. 2, a sealing nozzle 39 may be mounted between the spindle mounting housing 30 and the front end of the spindles 10a and 10b to block the spindle mounting part 14 from the outside and prevent foreign substances from entering the inside of the spindle mounting part 14. Additionally, the rotation shaft of the motor 20a or 20b and the spindle 10a or 10b may be coupled by a power transmission connection part 22.

In the present disclosure, as shown in FIGS. 1 and 2, it is preferable that the spindle mounting part 14 has a dual spindle structure in which two motors 20a and 20b and spindles 10a and 10b are mounted on one spindle mounting part 14.

According to the present disclosure, the roughened portion 40 formed on the spindle mounting housing 30 cancels out the high-frequency noise generated by the high-speed rotation of the motors 20a and 20b and spindles 10a and 10b, thereby reducing the overall noise that escapes outside the spindle mounting housing 30. Therefore, according to the present disclosure, noise generated by high-speed rotation of the motors 20a and 20b and spindles 10a and 10b can be reduced, thereby creating a more comfortable working environment.

## Claims

1. A device for processing a dental prosthesis, comprising:
one or more spindles (10a and 10b) that are rotationally driven by one or more motors (20a and 20b);
machining tools (12a and 12b) that are mounted on axis ends of the spindles (10a and 10b) to rotate together with the spindles (10a and 10b);
a spindle mounting part (14) that is driven in up-down and left-right directions, and on which the motors (20a and 20b) and the spindles (10a and 10b) are mounted; and
a workpiece mounting part (18) on which a workpiece (5) is fixedly mounted, and driven in a front-back direction,
wherein the spindle mounting part (14) includes a spindle mounting housing (30) in which the motors (20a and 20b) and spindles (10a and 10b) are mounted in its internal space, and one or more bearings (32) that are mounted inside the spindle mounting housing (30) to rotatably support the spindles (10a and 10b),
**characterized in that**
a roughened portion (40) that diffusely reflects noise generated by rotation of the motors (20a and 20b) and spindles (10a and 10b) is formed inside the spindle mounting housing (30).

2. The device of claim 1, wherein the roughened portion (40) is selected from a group consisting of a protrusion, a groove, a screw thread, and a knurl.

3. The device of claim 2, wherein a height (h) of the screw thread or knurl is 0.01 to 2 mm, and a pitch (p) thereof is 0.01 to 4 mm.

4. The device of claim 1, wherein:
one end of the spindle mounting housing (30) is further equipped with a motor bracket (38) for fixing the motors (20a and 20b), a bearing housing (34) for accommodating the bearings (32), and a bearing spacer (36) fitted between the bearings (32) to maintain a gap between the bearings (32); and
a roughened portion (40) is formed on at least one of the motor bracket (38), the bearing housing (34), and the bearing spacer (36).

5. The device of claim 1, wherein the spindle mounting part (14) has a dual spindle structure in which two motors (20a and 20b) and spindles (10a and 10b) are mounted on one spindle mounting part (14).

## Patentansprüche

1. Vorrichtung zur Bearbeitung einer Zahnprothese, umfassend:
eine oder mehrere Spindeln (10a und 10b), die durch einen oder mehrere Motoren (20a und 20b) drehend angetrieben werden;
Bearbeitungswerkzeuge (12a und 12b), die an den Achsenenden der Spindeln (10a und 10b) angebracht sind, um sich zusammen mit den Spindeln (10a und 10b) zu drehen;
ein Spindelhalterteil (14), das in Aufwärts-Abwärts-Richtung und Links-Rechts-Richtung angetrieben wird und an dem die Motoren (20a und 20b) und die Spindeln (10a und 10b) angebracht sind; und
ein Werkstückhalterteil (18), an dem ein Werkstück (5) fest angebracht ist und in Vorwärts-Rückwärts-Richtung angetrieben wird;
wobei das Spindelhalterteil (14) ein Spindelhaltergehäuse (30), in dessen Innenraum die Motoren (20a und 20b) und Spindeln (10a und 10b) angebracht sind, und ein oder mehrere Lager (32), die im Inneren des Spindelhaltergehäuses (30) angebracht sind, um die Spindeln (10a und 10b) drehbar zu lagern, beinhaltet,
**dadurch gekennzeichnet, dass**
im Inneren des Spindelhaltergehäuses (30) ein aufgerauter Abschnitt (40) ausgebildet ist, der die durch die Drehung der Motoren (20a und 20b) und Spindeln (10a und 10b) erzeugten Geräusche diffus reflektiert.

2. Vorrichtung nach Anspruch 1, wobei der aufgeraute Abschnitt (40) aus einer Gruppe ausgewählt ist, die aus einem Vorsprung, einer Nut, einem Schraubengewinde und einer Rändelung besteht.

3. Vorrichtung nach Anspruch 2, wobei eine Höhe (h) des Schraubengewindes oder der Rändelung 0,01 mm bis 2 mm beträgt und deren Teilung (p) 0,01 mm bis 4 mm beträgt.

4. Vorrichtung nach Anspruch 1, wobei:
ein Ende des Spindelhaltergehäuses (30) weiterhin mit einer Motorhalterung (38) zum Befestigen der Motoren (20a und 20b), einem Lagergehäuse (34) zur Aufnahme der Lager (32) und einem Lagerabstandshalter (36), der zwischen den Lagern (32) eingepasst ist, um einen Abstand zwischen den Lagern (32) aufrechtzuerhalten, ausgestattet ist; und
ein aufgerauter Abschnitt (40) an zumindest einem von der Motorhalterung (38), dem Lagergehäuse (34) und dem Lagerabstandshalter (36) ausgebildet ist.

5. Vorrichtung nach Anspruch 1, wobei das Spindelhalterteil (14) eine Doppelspindelstruktur aufweist, bei der zwei Motoren (20a und 20b) und Spindeln (10a und 10b) an einem Spindelhalterteil (14) angebracht sind.

## Revendications

1. Dispositif de traitement d'une prothèse dentaire, comprenant :
une ou plusieurs broches (10a et 10b) entraînées en rotation par un ou plusieurs moteurs (20a et 20b) ;
des outils d'usinage (12a et 12b) montés sur des extrémités d'axe des broches (10a et 10b) afin de tourner conjointement avec les broches (10a et 10b) ;
une partie de montage de broche (14) qui est entraînée dans les directions haut-bas et gauche-droite, et sur laquelle sont montés les moteurs (20a et 20b) et les broches (10a et 10b) ; et
une partie de montage de pièce (18) sur laquelle une pièce (5) est montée de manière fixe et entraînée dans une direction avant-arrière,
dans lequel la partie de montage de broche (14) comprend un boîtier de montage de broche (30) dans l'espace interne duquel sont montés les moteurs (20a et 20b) et les broches (10a et 10b), ainsi qu'un ou plusieurs roulements (32) montés à l'intérieur du boîtier de montage de broche (30) pour supporter en rotation les broches (10a et 10b), **caractérisé en ce que**
une partie rugueuse (40), qui réfléchit de manière diffuse le bruit généré par la rotation des moteurs (20a et 20b) et des broches (10a et 10b), est formée à l'intérieur du boîtier de montage de broche (30).

2. Dispositif selon la revendication 1, dans lequel la partie rugueuse (40) est choisie parmi un groupe comprenant une saillie, une rainure, un filetage et un moletage.

3. Dispositif selon la revendication 2, dans lequel la hauteur (h) du filetage ou du moletage est comprise entre 0,01 et 2 mm, et un pas (p) de celui-ci est de 0,01 à 4 mm.

4. Dispositif selon la revendication 1, dans lequel :
une extrémité du boîtier de montage de broche (30) est en outre équipée d'un support de moteur (38) pour fixer les moteurs (20a et 20b), d'un boîtier de roulement (34) pour loger les roulements (32), et d'une entretoise de roulement (36) placée entre les roulements (32) afin de maintenir un espace entre les roulements (32) ; et
une partie rugueuse (40) est formée sur au moins l'un parmi le support de moteur (38), le boîtier de roulement (34) et l'entretoise de roulement (36).

5. Dispositif selon la revendication 1, dans lequel la partie de montage de broche (14) présente une structure à double broche dans laquelle deux moteurs (20a et 20b) et deux broches (10a et 10b) sont montés sur une seule partie de montage de broche (14).
